(19) **Europäisches Patentamt**
**European Patent Office**
**Office européen des brevets**

(11) **EP 1 444 804 B1**

(12) **EUROPEAN PATENT SPECIFICATION**

(45) Date of publication and mention
of the grant of the patent:
**27.02.2013 Bulletin 2013/09**

(21) Application number: **02778843.9**

(22) Date of filing: **13.11.2002**

(51) Int Cl.:
*H04L 5/00* (2006.01)　　*H04L 27/26* (2006.01)
*H04L 5/16* (2006.01)　　*H04M 11/06* (2006.01)
*H04M 3/30* (2006.01)　　*H04B 3/32* (2006.01)

(86) International application number:
**PCT/US2002/036601**

(87) International publication number:
**WO 2003/043262 (22.05.2003 Gazette 2003/21)**

(54) **METHOD AND SYSTEM FOR SPECTRALLY COMPATIBLE REMOTE TERMINAL ADSL DEPLOYMENT**

VERFAHREN UND SYSTEM ZUM SPEKTRAL KOMPATIBLEN FERN-ENDGERÄT-ADSL-EINSATZ

PROCEDE ET SYSTEME DE COMPATIBILITE SPECTRALE POUR LE DEPLOIEMENT D'UN TERMINAL ADSL A DISTANCE

(84) Designated Contracting States:
**DE FI FR GB IT SE**

(30) Priority: **13.11.2001 US 350629 P**

(43) Date of publication of application:
**11.08.2004 Bulletin 2004/33**

(73) Proprietor: **Telcordia Technologies, Inc.**
**Piscataway, NJ 08854-4157 (US)**

(72) Inventor: **KERPEZ, Kenneth, J.**
**Long Valley, NJ 08807 (US)**

(74) Representative: **Beetz & Partner**
**Patentanwälte**
**Steinsdorfstrasse 10**
**80538 München (DE)**

(56) References cited:
**EP-A2- 0 969 605　　WO-A1-99/33215**
**US-A- 5 835 536　　US-A- 6 055 297**
**US-A- 6 055 297　　US-B1- 6 229 855**
**US-B1- 6 229 855**

- **JACOBSEN K S: "Text proposal for upstream power back-off" ETSI TM6, XX, XX, 29 November 1999 (1999-11-29), pages 1-6, XP002224208**
- **"Transmission and Multiplexing (TM); Access transmission systems on metallic access cables; Very high speed Digital Subscriber Line (VDSL); Part 2: Transceiver specification; TS 101 270-2" ETSI STANDARDS, LIS, SOPHIA ANTIPOLIS CEDEX, FRANCE, vol. TM-6, no. V1.1.5, 1 December 2000 (2000-12-01), XP014034816 ISSN: 0000-0001**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

This invention is related to the deployment of asymmetrical digital subscriber line ("ADSL") technology in the remote terminals of telephone networks and the maintenance of spectral compatibility of such remote terminal ADSL with the ADSL technology deployed in the central office of the telephone company.

**BACKGROUND**

The mainstay of the telephone company local network is the local subscriber loop, i.e., the loop from a central office ("CO") to a subscriber. The local subscriber loop is now being used to provide broadband digital telecommunication services such as digital subscriber line ("DSL") service. Such broadband DSL services include integrated services digital subscriber network ("ISDN"), high-rate digital subscriber line ("HDSL"), asymmetrical digital subscriber lines ("ADSL") and very high rate digital subscriber lines ("VDSL") technology. DSL services allow residential and business customers to send and/or receive digital data at higher rates of speed than were previously possible using analog modem technology.

DSL technologies are engineered to operate over a class of subscriber loops, such as nonloaded loops (18 kft) or Carrier Serving Area (CSA) loops (9 to 12 kft). Digital Subscriber Line (DSL) technology exploits the existing, ubiquitous, copper telephone loop plant to provide megabit per second (Mbps) high-speed Internet access and other services. The great majority of residential customers and many business customers are served by such metallic (copper) twisted pair cables connected from a local switch in the central office ("CO") to the subscriber's land-line telephones. For each subscriber, telephone and DSL signals travel on a twisted pair from a central office (CO) to the subscriber.

Asymmetric DSL ("ADSL") is one type of DSL now standardized as T1.413 by the American National Standards Institute ("ANSI"). ADSL uses the existing copper wires from the central office of the telephone company to the subscriber's premises to provide high-speed, high-bandwidth digital data transmission service. ADSL modems exist both in the central office where they are referred to as ADSL terminal units - central office ("ATU-C") and at the subscriber end where they are referred to as ADSL terminal units - remote ("ATU-R"). There is a third type of terminal unit, an intermediate terminal unit ("ATU-I"), which is used to provide service to one or more ATU-R downstream from a central office.

In ADSL more information can be delivered from the central office to the subscriber than in the reverse direction, thus, the asymmetric nature of the service. The original specification for ADSL provided for 1.536 Mbps downstream from the central office to the subscriber and 16Kbps from the subscriber to the central office. Since that time additional higher speed ADSL has been developed which permit downstream operation at up to 8 Mbps or more and upstream operation at up to 1 Mbps or more.

Performance of ADSL service in both directions is subject to the condition of the physical copper plant of the network. The length of the loop from the central office to the subscriber, the wire gauge or gauges present in the loop, the presence of bridge taps and cross-coupled interference or crosstalk all affect the performance.

Crosstalk generally increases with increasing frequency, and because DSL frequencies extend into the Megahertz ("MHz") range, crosstalk becomes the major limitation to high-speed ADSL. As time progresses it is expected that there will be many more ADSL users each demanding higher speed service. This will result in more crosstalk and higher-bandwidth services that are more vulnerable to crosstalk. Sources of crosstalk are often called "disturbers." There are two types of crosstalk: near-end crosstalk (NEXT) and far-end crosstalk (FEXT). NEXT is more powerful than FEXT, particularly below about 1 MHz where many DSLs use overlapping spectra. If there is one crosstalker, then the received crosstalk PSD is the product of a PSD transmitted on a nearby pair times the crosstalk coupling transfer function. With multiple crosstalkers the received crosstalk PSD is the linear sum of each component.

In order to control crosstalk interference between loops (lines), spectrum management is necessary. The American National Standards Institute (ANSI) Working Group T1E1.4, being responsible for DSL standards on ISDN Basic Access, HDSL and ADSL, initiated a project in 1998 to develop relevant standards for spectrum management. ANSI Standard T1.417-2001, *Spectrum Management for Loop Transmission Systems,* was approved and issued in January 2001. This ANSI standard applies relatively rigid rules uniformly across the entire loop plant. These rules, however, do not provide any deployment guidelines for ADSL systems employing intermediate transmission units ("ATU-I").

Remote terminal based ADSL, i.e., the use of ATU-I's, can lower the downstream bit rate of CO-based ADSL in the same binder primarily because of high-power far end crosstalk ("FEXT"). In a contribution to the T1E1 Working Group entitled " Performance of CO Deployed ADSL due to Crosstalk from RT Deployed ADSL" by J. Yang and D. Reilly, T1E1.4/2000-302, it was shown that many cases of RT-based ADSL crosstalk cause the bit rates of CO-based ADSL to be well below the basis bit rate targets necessary to be spectrally compatible. There are, however, a few combinations of loop lengths where RT-based ADSL is compatible with CO-based ADSL

In "Simulations of ADSL with Crosstalk from Remotely-Deployed SDSL" by D. Veeneman, G. McAninch and G. Sherrrill, T1E1.4/2000-240 the impact of RT-based SDSL on ADSL was examined. The results showed that RT-based SDSL is compatible with ADSL provided that the RT-based SDSL transmit power is cut back by a small amount (at most 1dB) in a few cases.

It would be desirable to have a technique that could provide for a method to make the deployment of RT-based ADSL compatible with CO-based ADSL

Further it would be desirable to have a method that is easy to implement at a low-cost using as much of the existing equipment as possible.

Additionally, it would be desirable to implement these methods in a system that could provide operational guidelines for the various terminal units so as to maximize data transmission while remaining within the spectral compatibility guidelines.

WO 99/33215 discloses a spectral optimization and joint signalling technique in which a transmit function is determined in response to a channel transfer function and the amounts of self NEXT interference, self FEXT interference and uncorrelated interference.

The paper "Text proposal for upstream ..." in ETSI TM6, 29.11.199, XP002224208, discloses a generalized definition of power back-off for the Part 2 VDSL specification. A global desired receive PSD is defined. NTs then compute their transmit PSD by dividing the global desired receive PSD by the insertion loss of the loop on which they reside.

EP 0969605 discloses crosstalk reduction by shaping of transmit signals. A channel towards a remote unit is measured and a transmission of a second remote unit is adjusted based upon the measurement.

US 6229855 discloses a method for controlling the power and/or frequency output of a digital data networks transmitter. Line loss information and noise margin at both the central office and the remote site are used for this.

## SUMMARY

In accordance with the present invention a method and system for deploying RT-based ADSL in a manner that is compatible with CO-based ADSL

A novel method for deployment of RT-based ADSL to make it compatible with CO-based ADSL uses sloped power back-off (PBO) reducing the power by various amounts depending on the transmission frequency. A complementary method for deployment of RT-based ADSL that is compatible with CO-based ADSL identifies an lower and upper notch frequency between which no data is transmitted.

Both these techniques can be used in a system to make RT-based ADSL compatible with CO-based ADSL at all combinations of loop lengths, while still allowing the RT-based ADSL a downstream bit rate that is acceptable.

## BRIEF DESCRIPTION OF THE DRAWINGS

FIG. 1 depicts an ADSL subscriber loop system having a central office (CO) connected to a remote terminal (ATU-R) through an intermediate terminal (ATU-I);

FIG. 2 depicts an illustrative embodiment of a system for implementing the methods of the present invention;

FIG. 3 is a graphical depiction of the minimum flat downstream power back-offs (PBOs) that make RT-based ADSL spectrally compatible with CO-based ADSL for various values of Y and Z;

FIG. 4 is a graphical depiction of the lower notch frequency, fa, of RT-based ADSL with a passband PSD notch that is spectrally compatible with CO-based ADSL for various values of Y and Z;

FIG. 5 is a graphical depiction of the upper notch frequency, fb, of RT-based ADSL with a passband PSD notch that is spectrally compatible with CO-based ADSL for various values of Y and Z;

FIG. 6 is a graphical representation of the downstream bit rate of spectrally compatible RT-based ADSL using power back-off for various values of Y and Z.

FIG. 7 is a graphical representation of the downstream bit rate of spectrally compatible RT-based ADSL using a notched transmit PSD for various values of Y and Z.

FIG. 8 is a graphical representation of the maximum downstream bit rate of spectrally compatible RT-based ADSL using either power back-off (PBO) or a notched transmit PSD for various values of Y and Z.

FIG. 9 is a graphical representation of downstream bit rates of spectrally compatible RT-based ADSL using sloping power back-off for various values of Y and Z.

FIG. 10 is a graphical representation of the model for the ADSL roll-off used in the present invention compared to the sum of the power of DMT tones with 6% raised cosine PSD's for the case of DMT tones turned off between fa = 250 kHz and fb = 700 kHz.

FIG. 11 is a graphical representation of the maximum downstream bit rates for RT-based ADSL for various lengths of Y and Z using the method and system of the present invention.

FIG. 12 is a diagram depicting the flow of the data in the notched PSD method in accordance with the present invention.

FIG. 13 is a diagram depicting the flow of data in the sloped power back off method in accordance with the present invention.

## DETAILED DESCRIPTION

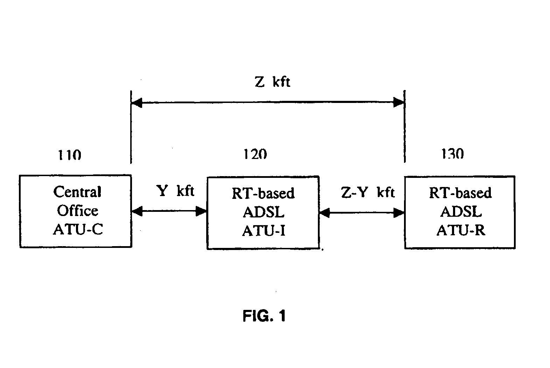

FIG. 1 depicts an ADSL system in accordance with the present invention. A central office ADSL terminal unit (ATU-C) 110 is connected to an intermediate ADSL terminal unit (ATU-I) 120 which in turn is connected to one or more subscribers through an ADSL remote terminal unit (ATU-R) 130. The connection between ATU-C 110 and ATU-I 120 and one or more ATU-Rs **130** is referred to as the local loop.

The above referenced *Spectrum Management for Loop Transmission Systems* provides guidelines for the proper management of spectrum so as to reduce the possibility of interference between local loops in the same binder, i.e., collocated in the same bundle of loops. ADSL bit rates are calculated with computer simulations using the methodology defined in the draft spectrum management standard referenced above.

All sources of near-end crosstalk ("NEXT") and far-end crosstalk ("FEXT") are included by the methodology and are generated using the models of Annex L of that reference. All NEXT coupling is calculated using the following equation (1) where $H(f,L)$ is the transfer function of the loop of length L at the frequency f (in Hz), $L$ is the NEXT coupling length, $X_N = 8.818 \times 10^{-14} \times (n/49)^{0.6}$ and $n$ is the number of disturbers.

$$NEXT(f,L) = X_N f^{1.5}(1 - |H(f,L)|^4) \qquad (1)$$

The simulations collocate all ATU-R's 130, and all crosstalk is in the same binder. A binder is the group of local loops held together in close proximity. All loops are 26 gauge. The distance from the central office ("CO") ATU-C 110 to the RT-based ADSL (ATU-I) 120 is Y kft. The distance from the RT-based ADSL (ATU-I) 120 to the ATU-R 130 is Z-Y kft and the distance from the CO ATU-C 110 to the ATU-R 130 is Z kft. The RT-based ADSL (ATU-I) only transmits downstream over a distance of 2-Y kft. Reference crosstalk is CO-based and is SM1, SM2 or SM3 (as defined in the above-referenced draft spectrum management standard) according to a loop length equal to Z which is the distance from the CO to ATU-Rs. Simulations were run with crosstalk from 24 RT-based ADSLs, as well as with crosstalk from 12 RT-cased ADSLs plus 12 reference disturbers.

A known method of maximizing the downstream bit-rate of RT-based ADSL while maintaining spectral compatibility with the CO-based ADSL is the use of the flat power back-off (PBO) method. In the flat power back-off method, the downstream transmit power of RT-based ADSL is lowered (from -40 dB/Hz) to the maximum that allows the CO-based ADSL to achieve the basis target bit rate defined for distance Z in the spectrum management standard. The power back-off is the power in dB by which the transmit PSD is lowered, flat across the passband. The amount of power back-off is calculated with the crosstalk from the 24 RT-based ADSL, as well as with mixed crosstalk from 12 RT-based ADSL plus 12 reference disturbers. The maximum power back-off of the two cases was used to calculate the bit rate of RT-based ADSL. Power back-off was always greater with mixed crosstalk, except for just a few cases (Y=4 kft and Z ≤ 6 kft) for which there was only a minor difference in power back-off. Some of the results are shown in Tables 1 and 2. In Tables 1 and 2, Y = 9kft. Table 1 depicts the calculations for the case of 24 RT-ADSL crosstalkers and Table 2 depicts the case of 12 RT-based ADSL crosstalkers and 12 CO-based reference crosstalkers.

**TABLE 1**

| Z-Y | Z | Power Back-Off (db) | RT-based ADSL downstream bit rate (kbps) | RT-based ADSL upstream bit rate (kbps) | CO-based ADSL downsteam bit rate (kbps) | Basis target downstream bit rate (kbps) | CO-based ADSL upstream bit rate (kbps) | Basis target upstream bit rate (kbps) |
|---|---|---|---|---|---|---|---|---|
| 0 | 9 | 0.0 | 12488 | 1456 | 9327 | 4850 | 1456 | 645 |
| 1 | 10 | 37.1 | 8698 | 1456 | 4595 | 4595 | 1456 | 553 |
| 2 | 11 | 36.3 | 7410 | 1456 | 3598 | 3595 | 1456 | 461 |
| 3 | 12 | 36.5 | 5873 | 1456 | 2922 | 2920 | 1455 | 344 |
| 4 | 13 | 32.3 | 5377 | 1455 | 2040 | 2045 | 1440 | 202 |
| 5 | 14 | 26.3 | 5326 | 1448 | 1261 | 1265 | 1411 | 163 |
| 6 | 15 | 21.1 | 5102 | 1429 | 706 | 705 | 1360 | 124 |

The bit rate of RT-based ADSL is calculated in accordance with the draft Spectrum Management Standard, except that the downstream transmit power is lowered from - 40dBm/Hz by the power back-off. Crosstalk is from the same sources for RT-based ADSL as they are for CO-based ADSL: either 24 RT-based ADSL, or 12 RT-based ADSL plus 12 reference with the reference being CO-based. The RT-based signal and the RT-based crosstalk both have power back-off downstream. Upstream bit rates are all fairly high.

The initial set of results had downstream RT-based ADSL bit rates that were very high with high values of power back-off. In one case (Y= 14 kft & Z = 15 kft), there was a 7.5 Mbps downstream bit rate with 48 dB power back-off. Once the background noise was adjusted from -140 dBm/Hz to -130 dBm/Hz the rate dropped to a more reasonable 6 Mbps. All RT-based ADSL bit rates in Tables 1 and 2 were calculated with -130 dBm/Hz background noise and all CO-based ADSL bit rates were calculated with -140 dBm/Hz background noise.

**TABLE 2**

| Z-Y | Z | Power Back-Off (db) | RT-based ADSL downstream bit rate (kbps) | RT-based ADSL upstream bit rate (kbps) | CO-based ADSL downsteam bit rate (kbps) | Basis target downstream bit rate (kbps) | CO based ADSL upstream bit rate (kbps) | Basis target upstream bit rate (kbps) |
|---|---|---|---|---|---|---|---|---|
| 0 | 9 | 0.0 | 12488 | 1456 | 5644 | 4850 | 705 | 645 |
| 1 | 10 | 40.2 | 7765 | 1456 | 4595 | 4595 | 624 | 553 |
| 2 | 11 | 42.6 | 5449 | 1425 | 3596 | 3595 | 522 | 461 |
| 3 | 12 | 40.1 | 4850 | 1417 | 2920 | 2920 | 554 | 344 |
| 4 | 13 | 40.5 | 2970 | 1351 | 2045 | 2045 | 453 | 202 |
| 5 | 14 | 33.8 | 3115 | 1264 | 1266 | 1265 | 343 | 163 |
| 6 | 15 | 34.3 | 1526 | 1171 | 705 | 705 | 207 | 124 |

One of the novel spectral compatibility methods of the present invention can be used alone or in combination with a power back-off method. This method identifies a first lower notch frequency, $fa$ (kHz), and second upper notch frequency, $fb$ (kHz), in between which the intermediate frequencies are no longer used for transmitting data downstream from the RT-based ADSL. Only frequencies above and below the notch defined by the first and second frequencies transmit data. The notch generally slopes from first frequency $fa$ at -200 dB/decade to a bottom where the slope meets the line from second frequency $fb$ sloping at +200 dB/decade. Other slopes may also be used as discussed below.

In some cases the upper passband frequencies were not useful, so if the upper notch frequency $fb$ was calculated to be 1 MHz or greater, then $fb$ was set equal to 100,000 k Hz, essentially equal to infinity. In this specific case, the "notch" degenerates into simply estimating a high frequency portion of the transmit spectrum. Similarly, if lower notch frequency $fa$ is less than 138 kHz then the notch simply eliminates some low frequencies. Simulations showed that simultaneously applying some power back-off improved results, so all notched RT-based ADSL were simulated with a fixed level of 4 dB power back-off in the downstream passband. The RT-based ADSL downstream passband transmit power was -44dBm/Hz. Crosstalk was generated by the downstream SM9 PSD lowered by 4 dB and with the passband PSD notch. For a given value of lower notch frequency *fa* the minimum value of upper notch frequency *fb* was found for which the RT-based ADSL was spectrally compatible with the CO-based basis ADSL. Then the downstream bit rate of the RT-based ADSL was calculated with the same crosstalk, but with -130 dBm/Hz background noise. Both the transmit PSD and the crosstalk of downstream RT-based ADSL have the same passband notch. Only frequencies below the lower notch frequency *fa* or above the upper notch frequency *fb* can carry data.

The method of the present invention calculates the values of lower notch frequency *fa* in steps of 25 kHz in order to find the value of *fa* that maximizes the downstream bit rate of RT-based ADSL for that specific distance. For one use of the method in a simulation the values are presented in Tables 3 and 4. Table 3 sets forth the values for the case of 24 RT-based crosstalkers. Table 4 sets forth the values for the case of 12 RT-based crosstalkers plus 12 CO-based reference disturbers. In both cases Y = 9 kft and the minimum RT-based downstream bit rate is presented. RT-based ADSL bit rates were almost always lower with mixed crosstalk, except for a few cases (Y = 4 kft and Z ≤ 6 kft, or Y = 5 kft and Z = 6 kft) for which there was only a minor difference in bit rate. Upstream bit rates were all fairly high.

**TABLE 3**

| Z-Y | Z | *fa* (kHz) | *fb* (kHz) | RT-based ADSL downstream bit rate (kbps) | RT-based ADSL upstream bit rate (kbps) | CO-based ADSL downsteam bit rate (kbps) | Basis target downstream bit rate (kbps) | CO-based ADSL upstream bit rate (kbps) | Basis target upstream bit rate (kbps) |
|---|---|---|---|---|---|---|---|---|---|
| 0 | 9 | no notch | no notch | 11200 | 1456 | 9327 | 4850 | 1456 | 645 |
| 1 | 10 | 175 | 905 | 2277 | 1456 | 4595 | 4595 | 1456 | 553 |
| 2 | 11 | 175 | 831 | 2692 | 1445 | 3595 | 3595 | 1441 | 461 |
| 3 | 12 | 175 | 819 | 2616 | 1403 | 2935 | 2920 | 1393 | 344 |
| 4 | 13 | 175 | 675 | 3640 | 1341 | 2060 | 2045 | 1326 | 202 |
| 5 | 14 | 175 | 520 | 4752 | 1265 | 1266 | 1265 | 1245 | 163 |
| 6 | 15 | 200 | 438 | 5420 | 1177 | 706 | 705 | 1153 | 124 |

**TABLE 4**

| Z-Y | Z | fa (kHz) | fb (kHz) | RT-based ADSL downstream bit rate (kbps) | RT-based ADSL upstream bit rate (kbps) | CO-based ADSL downsteam bit rate (kbps) | Basis target downstream bit rate (kbps) | CO-based ADSL upstream bit rate (kbps) | Basis target upstream bit rate (kbps) |
|---|---|---|---|---|---|---|---|---|---|
| 0 | 9 | no notch | no notch | 11200 | 1456 | 5644 | 4850 | 705 | 645 |
| 1 | 10 | 300 | 100000 | 2066 | 1456 | 4601 | 4595 | 624 | 553 |
| 2 | 11 | 225 | 100000 | 1031 | 1416 | 3616 | 3595 | 522 | 461 |
| 3 | 12 | 150 | 979 | 1125 | 1384 | 2920 | 2920 | 554 | 344 |
| 4 | 13 | 150 | 902 | 1692 | 1287 | 2045 | 2045 | 453 | 202 |
| 5 | 14 | 150 | 709 | 3161 | 1187 | 1267 | 1265 | 343 | 163 |
| 6 | 15 | 150 | 625 | 3598 | 1085 | 707 | 705 | 207 | 124 |

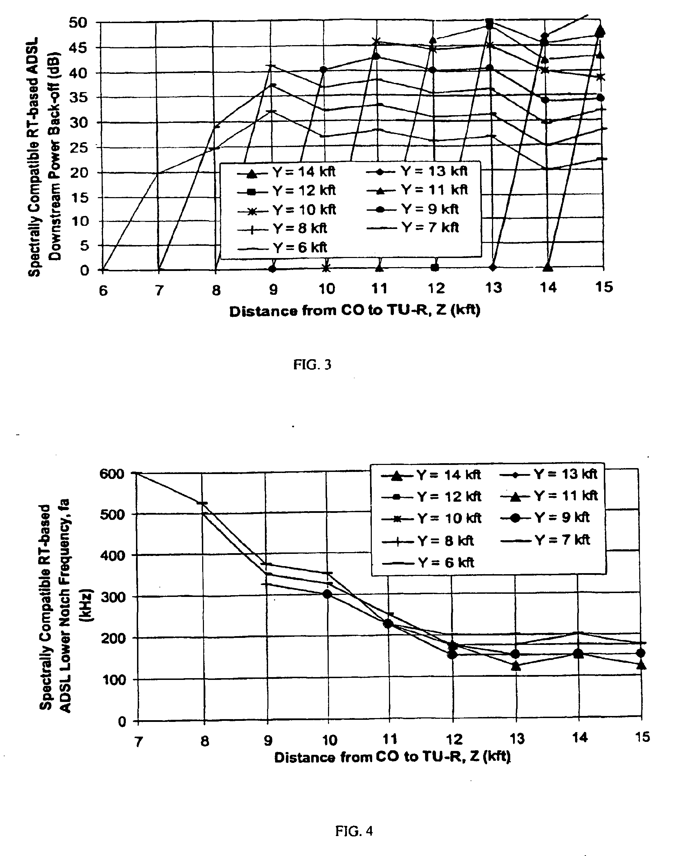

FIG. 3 depicts the minimum flat downstream power back off that makes RT-based ADSL spectrally compatible with CO-based ADSL. Y is the loop length from the CO to the RT.

FIG. 4 depicts the lower notch frequency, *fa*, of RT-based ADSL with a passband PSD notch that is spectrally compatible with CO-based ADSL. Y is the loop length from the CO to the RT. Some curves overlap at large Y and Z.

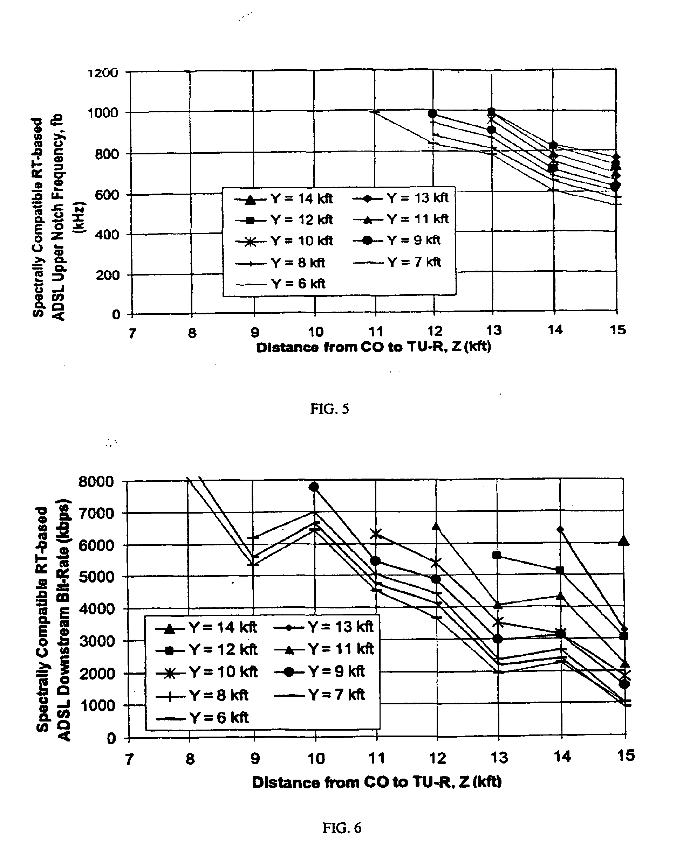

FIG. 5 depicts the upper notch frequency, *fb*, of RT-based ADSL with a passband PSD notch that is spectrally compatible with CO-based ADSL. Cases of RT-based ADSL with a passband PSD notch that do not use the upper passband have *fb* essentially equal to infinity. Y is the loop length from the CO to the RT.

FIG. 6 is the downstream bit rate of spectrally compatible RT-based ADSL using power back-off. Y is the loop length from the CO to the RT.

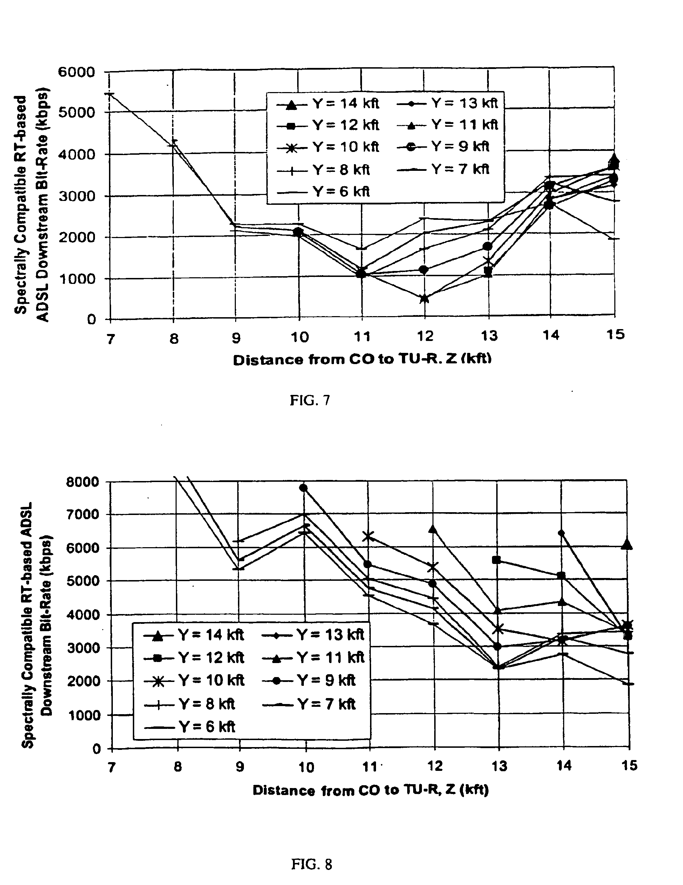

FIG. 7 is the downstream bit rate of spectrally compatible RT-based ADSL using a notched transmit PSD. Y is the loop length from the CO to the RT. The results in FIG. 6 do not appear to be very good. For some of the longer loop lengths, however, the notched PSD allows significantly higher downstream RT-based ADSL bit rates than power back-off. Combining the maximum over both methods, the best achievable downstream bit rates of spectrally compatible RT-based ADSL using this combination are shown in FIG. 8.

FIG. 8 depicts the maximum downstream bit rates for spectrally compatible RT-based ADSL using either power back-off or a notched transmit PSD. Y is the loop length from the CO to the RT. Bit rates of the spectrally compatible RT-based ADSLs in FIG. 8 can be as low as about 2 Mbps, but are typically between 3 and 6 Mbps. This is quite acceptable considering that spectral compatibility is achieved. Upstream bit rates were all fairly high.

An additional method in accordance with the present invention is an improvement over the power back-off method that uses a power back-off that is a function of the frequency across the downstream RT-based ADSL band. This can then be used alone or in combination with the PSD notch described above.

A power back-off ("PBO") that varies as a function of frequency was tested. PBO in dB is a straight line in the frequency domain. Sloping from *PBOa* dB at 138 kHz to *PBOb* at 1104 kHz in accordance with equation (2) wherein $m = (PBOb/PBOa)1104000-13800)$, $b = PBOa - m*138000$ and *f is* the frequency in Hz.

$$\text{PBO} = m^* f + b \text{ dB}$$

The bit rate of RT-based ADSL is calculated in accordance with the Spectral Compatibility Guidelines except that the downstream transmit power is lowered from the SM9 PSD template by the sloping PBO. Crosstalk is from the same sources for the RT-based ADSL as they are for the CO-based ADSL: either 24 RT-based ADSL or 12 RT-based ADSL plus 12 CO-based reference. The RT-based signal and the RT-based crosstalk both have power back-off downstream only.

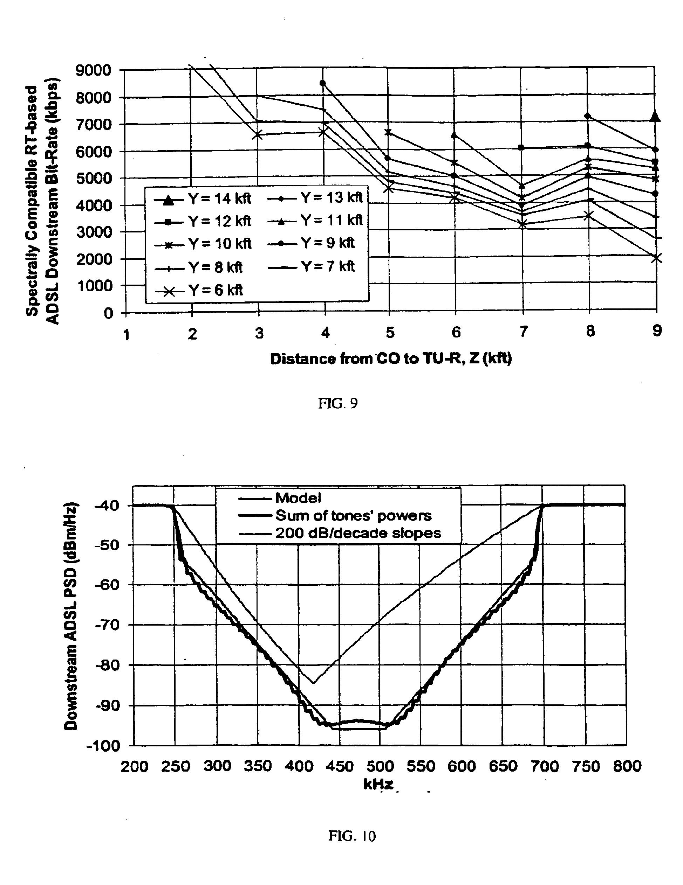

The method requires a looping through of the values of PBOa from 0 to 60 db in steps of 1 db in order to find the minimum value of PBOb that achieved spectral compatibility with the CO-based ADSL with both homogenous and mixed crosstalk. The values of PBOa and PBOb that maximized the bit rate of RT-based ADSL while maintaining spectral compatibility with the CO-based ADSL are set forth in Table 5. RT-based ADSL bit rates are in FIG. 9. FIG. 9 depicts the downstream bit rates of spectrally compatible downstream based RT-based ADSL via sloping power back-off.

**TABLE 5**

| Z-Y | Z | PBO at 138 kHz $PBOa$ (db) | PBO at 1104 kHz $PBOb$ (db) | RT-based ADSL downstream bit rate (kbps) | RT-based ADSL upstream bit rate (kbps) | CO-based ADSL downsteam bit rate (kbps) | Basis target downstream bit rate (kbps) | CO-based ADSL upstream bit rate (kbps) | Basis target upstream bit rate (kbps) |
|---|---|---|---|---|---|---|---|---|---|
| 0 | 9 | 35 | 0 | 12488 | 1456 | 5644 | 4850 | 705 | 645 |
| 1 | 10 | 23 | 53 | 8391 | 1456 | 4595 | 4595 | 624 | 553 |
| 2 | 11 | 31 | 53.4 | 5622 | 1425 | 3596 | 3595 | 522 | 461 |
| 3 | 12 | 48 | 31.2 | 4994 | 1417 | 2920 | 2920 | 554 | 344 |
| 4 | 13 | 58 | 17.9 | 3901 | 1351 | 2045 | 2045 | 453 | 202 |
| 5 | 14 | 53 | 0 | 4928 | 1264 | 1265 | 1265 | 343 | 163 |
| 6 | 15 | 48 | 0 | 4264 | 1171 | 702 | 705 | 207 | 124 |

The sloping power back-off methodology described above may be combined with the use of an improved notched PSD method. With no spectral shaping, DMT tones exhibit a relatively slow sin(x)/x roll-off and are susceptible to narrowband interference. It is generally accepted that some spectral shaping should be applied to get a sharper roll-off. Typical techniques involve using a window and cyclic prefix symbols to shape the roll-off into that of a raised cosine filter. The more excess bandwidth in the raised cosine filter the sharper the roll-off, but as the excess bandwidth becomes too high data tones have to be sacrificed and data rate is lost. While an excess bandwidth of 7.5% could be achieved by using all cyclic prefix tomes, a more realizable value of 6% excess bandwidth is assumed.

Assuming each tone has a 6 % excess bandwidth raised cosine roll-off, the PSD of the entire DMT block may be calculated by summing the contribution from each tone's power. This is, however, a calculation intensive process so a simple but accurate approximation of the roll-off was created based on a number of test cases. Downstream RT-ADSL comes between frequencies fa and *fb* are turned off and transmit no power. If $fb \leq fa$ then there is no notch. Otherwise, the model of the RT-based ADSL downstream PSD has the notch defined by the maximum of the "lower slope" and the "upper slope" in Table 6.

**TABLE 6**

| Frequency, f (Nz) | PSD (dBm/Hz) |
|---|---|
| $f < fa$ | lower slope = -40 |
| $fa \leq f < fa + 12000$ | lower slope = -40 - (1.167/1000)*($f$ - $fa$) |
| $fa + 12000 \leq f < fa + 192000$ | lower slope = -54 - (0.2333/1000)*($f$ - $fa$ - 12000) |
| $fa + 192000 \leq f$ | lower slope = -96 |
| | |
| $f < fb - 192000$ | upper slope = -96 |
| $fb - 192000 \leq f < fb - 12000$ | upper slope = -54 - (0.2333/1000)*($fb$ - $f$-12000) |
| $fb - 12000 \leq f < fb$ | upper slope = -40 - (1.167/1000)*($fb$- $f$) |
| $fb \leq f$ | upper slope = -40 |

FIG. 10 depicts the model for the ADSL roll-off used in the present method in comparison to the sum of the power of the DMT tones with 6% raised cosine PSDs for the DMT tones turned off between fa = 250 kHz and fb = 700 kHz. This approach uses a sharper and deeper notch than the approach set forth above with no spectral shaping which assumed a 200 dB/decade slope. Again, if the upper notch frequency, *fb,* was calculated to be 1 MHz or greater then *fb* was set equal to 1000000 kHz, i.e., essentially infinity.

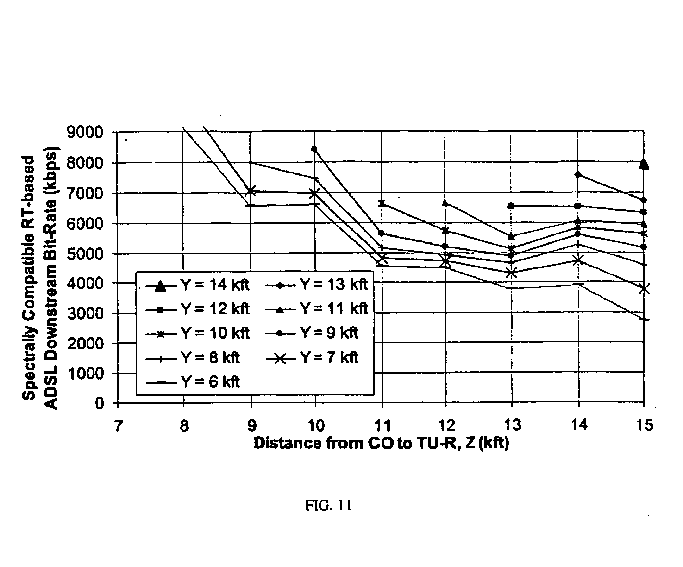

Using the notched PSD approach combined with sloping power back-off results were improved. In the simulation, the RT-based ADSL downstream transmit PSD is the SM9 PSD with a notch as defined in Table 6 and this PSD has the sloping PBO discussed above. All values of *PBOa* and *PBOb* from 0 to 60 dB in steps of 10 db were run, with all values of *fa* in steps of 50 kHz. For given values of *PBOa, PBOb,* and *fa,* the minimum value of upper notch frequency *fb* was found in which the RT-based ADSL was spectrally compatible with the CO-based basis ADSL. Then the downstream bit rate of the RT-based ADSL was calculated with the same crosstalk, but with -130 dBm/Hz background noise, and only frequencies at or below the lower notch frequency, *fa*, or at or above the upper notch frequency *fb* carry data. Both homogenous and mixed crosstalk compatibility tests must pass. The superior results of this combination method can be seen in Table 7 and FIG. 11.

TABLE 7

| Z -Y | Z | PBO at 138kHz *PBOa* (db) | PBO at 1104 kHz *PBOb* (db) | RT-based ADSL lower notch freq. *fa* (kHz) | RT-based ADSL upper notch freq. *fb* (kHz) | RT-based ADSL downstream bit rate (kbps) | RT-based ADSL up-stream bit rate (kbps) | CO-based ADSL down-steam bit rate (kbps) | Basis target down-stream bit rate (kbps) | CO-based ADSL up-stream bit rate (kbps) | Basis target up-stream bit rate (kbps) |
|---|---|---|---|---|---|---|---|---|---|---|---|
| 1 | 10 | 40 | 40 | 900 | 915 | 7702 | 1456 | 4595 | 4595 | 624 | 553 |
| 2 | 11 | 30 | 50 | 450 | 569 | 5227 | 1425 | 3595 | 3595 | 522 | 461 |
| 3 | 12 | 50 | 20 | 600 | 719 | 5169 | 1417 | 2921 | 2920 | 554 | 344 |
| 4 | 13 | 50 | 0 | 450 | 641 | 4870 | 1351 | 2045 | 2045 | 453 | 202 |
| 5 | 14 | 40 | 0 | 450 | 555 | 5597 | 1264 | 1265 | 1265 | 343 | 163 |
| 6 | 15 | 30 | 0 | 300 | 469 | 5160 | 1171 | 707 | 705 | 207 | 124 |

Simulations were run and determined that all spectrally compatible RT-based ADSL PSD's are also compatible with all other basis systems, including HDSL2. Also, all spectrally compatible RT-based ADSL PSDs presented here passed the tests for spectral compatibility with G.lite.

Using a finer-grained search for the case of notched PSDs with PBO (i.e. finer than 10 db increments) would raise the bit rates somewhat further but at the cost of additional computation time. Knowledge of the loop lengths Y and Z are important as inaccurate loop length data would likely cause incompatibilities.

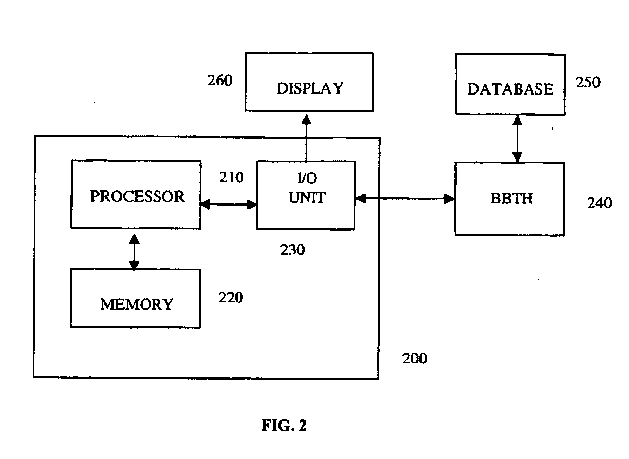

Referring to FIG. 2, an ADSL spectral compatibility system according to the present invention provides for a computer **200** having a processor **210** in communication with a memory **220** (which can comprise either primary memory, such as RAM, or secondary memory, such as a magnetic disk drive or other storage media or a combination thereof) and input/output (I/O) unit **230.** I/O unit **230** is adapted to receive data indicative of the length of loop Z in kft and the distance from the CO to the AU-I, i.e. parameter Y also in kft from an external device such as a broadband test head (BBTH) **240** and/or a database **250** of network configuration data. Also, instead of using a BBTH, the data could be captured from an ADSL modem or DSLAM in the central office of the telephone network. Using this information and any additional information necessary regarding the gauge of the wire in the loop, the types and numbers of crosstalk disturbers, attenuation and transfer function of the loop sections and crosstalk coupling at all frequencies the optimal operating parameter for the RT-based ADSL terminal (ATU-I) is determined using the method set forth below which method is implemented in computer software stored in memory **220** and executed in processor **210.** The information on optimal operating parameters to achieve maximum bandwidth and maintain spectral compatibility may then be used by the central office and its ATU-C in order to communicate with and modify the operation of the RT-based ADSL units. Display **260** may be used to display graphical and/or textual information related to the operation of the PSD measurements and crosstalk identification. Other input/output devices (not shown) may be used in conjunction with the computer **200** such as a keyboard, mouse, touchpad, trackball etc. in order to provide a user interface.

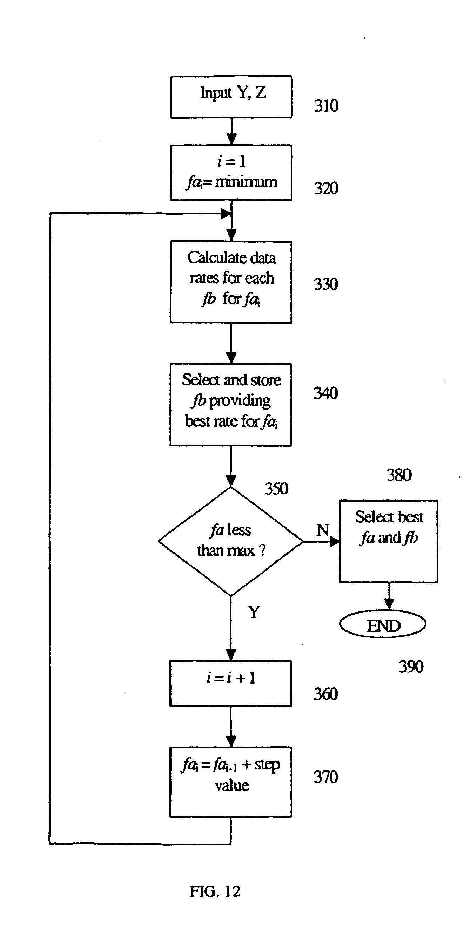

Processor **210** executes the method steps described herein as stored in memory **220** in order to determine the optimal operating parameters for the RT-ADSL while maintaining spectral compatibility. FIG. 12 depicts the flow of data and decisions necessary to implement the present methods in a system such as that described in FIG. 2. At the first step **100** of the process the distances, Z (kft), from the central office to the subscriber ATU-R and Y (kft) from the CO to the ATU-I are determined and input. This could be done through the use of a broadband test head (BBTH) **240**, a device for the measurement of network characteristics that may be present in the central office, through the use of a database **250** that contains information on the topology of the local network, or by extracting this data from the DSL modems or DSLAMS. Once that information is known for a specific CO **110**, **ATU-I 120** and ATU-R **130** then the system can use one of the above described methods to determine optimal operating parameters.

The use of the notched PSD method is shown in FIG. 12, at step **320** an iteration counter is set and the lower frequency *fa* is set to a minimum possible value usually starting at a low frequency. At step **330** the process calculates the data rate that would be achieved for each of a range of upper notch frequencies *fb* for the given frequency *fa* while still maintaining spectral compatibility. At step **340** the upper notch frequency providing the best data rate while maintaining spectral compatibility is selected and stored for that value of *fa*. At step **350** the process determines of all of the possible lower notch frequency values have been processed. If not the iteration counter is incremented at step **360** and the lower notch frequency *fa* is incremented by a step value at step **370.** A step value of 25 kHz is preferred but different step values may be used depending on the computational resources available and the time constraints on finding the data. At step **380** the upper and lower notch frequencies that provide the best data rate are selected and used by the ADSL system to transmit data. Alternatively, the process could save computational time by selecting the first upper notch frequency *fb* that provides a data rate within the spectral compatibility guidelines.

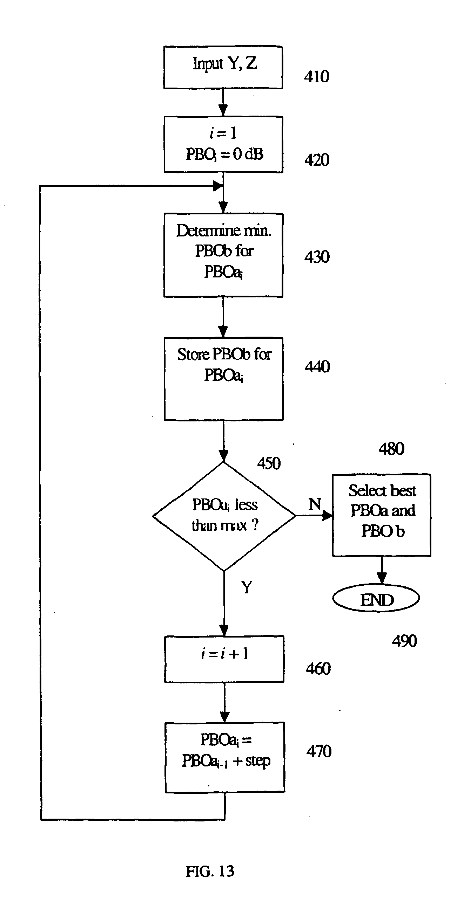

The notched PSD method set forth in FIG. 12 can be combined with flat power back-off and/or sloped power back-off. FIG. 13 depicts the data flow for the sloped power back-off (PBO) method of the present invention. Again the loop length Y and Z are necessary inputs to the calculations starting at step **410**. An iteration counter is set at step **420** along with the minimum power back off for frequency a (138 kHz). It is possible to use various starting points for the beginning frequency. In the current system and method 138 kHz is used because it is the lowest downstream ADSL frequency in the current standard T1.413. The method requires a looping through of the values of PBOa from 0 to 60 db in steps, preferably of 1 dB, in order to find the minimum value of PBOb (at frequency b= 1104kHz) that achieved spectral compatibility with the CO-based ADSL with both homogenous and mixed crosstalk. To achieve this, at step **430** the data rates for the specified PBOa are measured for differing values of PBOb to find the lowest value of PBOb that achieves spectral compatibility. At step **440** the value of PBOb found for a given PBOa is stored. At step **450** the iterative process is terminated if all values of PBOa have been completed otherwise at step **460** the iteration counter is incremented and at step **470** the value of PBOa is incremented by a step value, preferably 1 db. Other step values may be used depending on the desire for computational efficiency. Once all values of PBOa have been completed, at step **480** the process selects the pair of PBOa and PBOb values that have provided the best data rate while remaining spectrally compatible. The values of PBOa and PBOb that maximized the bit rate of RT-based ADSL while maintaining spectral compatibility with the CO-based ADSL are selected for use by the ADSL system. The sloped power back-off method may be used alone or in conjunction with the notched PSD method.

The above calculations may be done in the digital signal line access multiplexer (DSLAM), in the ADSL modems (ATU-R, ATU-I or ATU-C) or performed off-line and stored. The actual place the calculations are done is not as important as the use of the spectral compatibility spectra by the RT-based ADSL.

The above description has been presented only to illustrate and describe the invention. It is not intended to be exhaustive or to limit the invention to any precise form disclosed. Many modifications and variations are possible in light of the above teaching. For example, the teachings may be applied to other types of xDSL systems. The applications described were chosen and described in order to best explain the principles of the invention and its practical application to enable others skilled in the art to best utilize the invention on various applications and with various modifications as are suited to the particular use contemplated.

**Claims**

1. A method for maximizing the data transmission rates to a subscriber in a digital subscriber line (DSL) system while maintaining spectral compatibility between a CO-based DSL terminal and an RT-based DSL terminal comprising the steps of:

   estimating the length (Y) of the line between the CO-based DSL terminal and the RT-based DSL terminal and the length (Z) of the line between the CO-based DSL terminal and the subscriber;
   determining the minimum power back-off at a predetermined upper frequency necessary to provide a spectrally compatible data transmission rate for each of a plurality of power back-off values at a predetermined lower frequency using the lengths (Y, Z) estimated;
   selecting the combination of power back-offs at the lower and upper frequencies that provides the greatest data transmission rate; and,
   adjusting the downstream transmit power of each transmitted frequency tone of the RT-based DSL terminal between the lower and upper frequency by the amount of the slope between the power back-off for the lower frequency and the power back-off for the upper frequency.

2. The method of claim 1 wherein the plurality of power back-off values for the lower frequency varies.

3. The method of claim 1 wherein the predetermined upper frequency is approximately 1 104 kHz.

4. The method of claim 1 wherein the predetermined lower frequency is approximately 138 kHz.

5. A method for maximizing the data transmission rates to a subscriber in a digital subscriber line (DSL) system while maintaining spectral compatibility between a CO-based DSL terminal and an RT-based DSL terminal comprising the steps of:

   determining the length (Y) of the line between the CO-based DSL terminal and the RT-based DSL terminal and the length (Z) of the line between the CO-based DSL terminal and the subscriber;
   determining an upper notch frequency necessary to provide a spectrally compatible data transmission rate for each of a plurality of lower notch frequencies using the lengths (Y, Z) estimated, wherein data is not transmitted between the lower and upper notch frequencies;
   selecting the lower and upper notch frequencies that provide the greatest data transmission rate while maintaining spectral compatibility for the measured distances; and
   transmitting data downstream from the RT-based DSL terminal below the lower notch frequency and above the upper notch frequency.

6. The method of claim 5 wherein each of the plurality of lower notch frequencies varies by approximately 25 kHz.

7. The method of claim 5 wherein the slope of the power of the transmitted signal is -200dB/decade from the lower notch frequency.

8. The method of claim 5 wherein the slope of the power of the transmitted signal is +200 dB/decade toward the upper notch frequency.

9. The method of claim 5 wherein for upper notch frequencies greater than an upper threshold the upper notch frequency is set to 1,000,000 kHz.

10. The method of claim 9 wherein the upper threshold is approximately 1 MHz.

11. The method of claim 5 wherein the slope of the transmitted power signal from the lower frequency fa to the upper frequency fb is adjusted from the unfiltered sin(x)/x roll-off by spectral shaping of the sharper roll-off by using windowing and/or filtering.

12. A system for the deployment of digital subscriber lines (DSL) to maintain spectral compatibility between a CO-based DSL terminal (110) and an RT-based DSL terminal comprising:

   means (200) for determining the length (Y) of the line between the CO-based DSL terminal (110) and the RT-based DSL (120) terminal and the length (Z) of the line between the CO-based DSL terminal (110) and the subscriber (130);
   means (200) for determining the minimum power back-off at a predetermined upper frequency necessary to provide a spectrally compatible data transmission rate for each of a plurality of power back-off values at a predetermined lower frequency using the lengths (Y, Z) estimated;
   means (200) for selecting the combination of power back-offs at the lower and upper frequencies that provides the greatest data transmission rate; and
   means (200) for controlling the downstream transmit power of the RT-based DSL terminal between the lower and upper frequency by the amount of the slope between the power back-off for the lower frequency and the power back-off for the upper frequency.

13. The system of claim 12 wherein the predetermined upper frequency is approximately 1 104 kHz.

14. The system of claim 12 wherein the predetermined lower frequency is approximately 138 kHz.

15. The system of claim 12 wherein the means for determining the minimum power back-off at the predetermined upper frequency determines such minimum power back-off for each of a plurality of power back off values for the predetermined lower frequency varying by 1 db.

16. A system for the deployment of digital subscriber lines (DSL) capable of maintaining spectral compatibility between a CO-based DSL terminal and an RT-based DSL terminal comprising:

   means for determining the length (Y) of the line between the CO-based DSL terminal and the RT-based DSL terminal and the length (Z) of the line between the CO-based DSL terminal (110) and the subscriber (130);
   means (200) for determining an upper notch frequency necessary to provide a spectrally compatible data transmission rate for each of a plurality of lower notch frequencies using the lengths (Y, Z) estimated, wherein the data is not transmitted between the lower and upper notch frequencies;
   means (200) for selecting the lower and upper notch frequencies that provides the greatest data transmission rate while maintaining spectral compatibility for the measured distances; and
   means (200) for controlling the transmittal of data downstream from the RT-based DSL terminal below the lower notch frequency and above the upper notch frequency.

17. The system of claim 16 wherein the means for determining determines the upper notch frequency for each of a plurality of lower notch frequencies varying by approximately 25 kHz.

18. The system of claim 16 wherein the slope of the power of the transmitted signal is controlled so as to be -200dB/decade from the lower notch frequency.

19. The system of claim 16 wherein the slope of the power of the transmitted signal is controlled so as to be +200 dB/decade toward the upper notch frequency.

**Patentansprüche**

1. Verfahren zur Maximierung der Datenübertragungsraten der Datenübertragung zu einem Teilnehmer in einem System mit Digitalem Teilnehmeranschluss (DSL, Digital Subscriber Line) unter Aufrechterhaltung der spektralen Kompatibilität zwischen einem in einer Zentrale befindlichen DSL-Endgerät und einem entfernt liegenden DSL-Endgerät, das folgende Schritte umfasst:

Abschätzen der Länge (Y) der Leitung zwischen dem in der Zentrale befindlichen DSL-Endgerät und dem entfernt liegenden DSL-Endgerät und der Länge (Z) der Leitung zwischen dem in der Zentrale befindlichen DSL-Endgerät und dem Teilnehmer,
Ermitteln des Mindest-Power-Backoffs bei einer vorgegebenen oberen Frequenz, das erforderlich ist, um eine spektral kompatible Datenübertragungsrate für jeden Wert einer Vielzahl von Werten des Power-Backoffs bei einer vorgegebenen unteren Frequenz unter Verwendung der geschätzten Längen (Y, Z) zu erzielen,
Auswählen der Kombination von Power-Backoffs bei der unteren und der oberen Frequenz, welche die höchste Datenübertragungsrate ergibt,
und
Einstellen der Downstream-Übertragungsleistung für jeden übertragenen Frequenzton des entfernt liegenden DSL-Endgeräts zwischen der unteren und der oberen Frequenz durch den Betrag der Steigung zwischen dem Power-Backoff für die untere Frequenz und dem Power-Backoff für die obere Frequenz.

2. Verfahren nach Anspruch 1, bei dem die Vielzahl von Werten des Power-Backoffs für die untere Frequenz variiert.

3. Verfahren nach Anspruch 1, bei dem die vorgegebene obere Frequenz etwa 1104 kHz beträgt.

4. Verfahren nach Anspruch 1, bei dem die vorgegebene untere Frequenz etwa 138 kHz beträgt.

5. Verfahren zur Maximierung der Datenübertragungsraten der Datenübertragung zu einem Teilnehmer in einem System mit Digitalem Teilnehmeranschluss (DSL, Digital Subscriber Line) unter Aufrechterhaltung der spektralen Kompatibilität zwischen einem in einer Zentrale befindlichen DSL-Endgerät und einem entfernt liegenden DSL-Endgerät, das folgende Schritte umfasst:

Ermitteln der Länge (Y) der Leitung zwischen dem in der Zentrale befindlichen DSL-Endgerät und dem entfernt liegenden DSL-Endgerät und der Länge (Z) der Leitung zwischen dem in der Zentrale befindlichen DSL-Endgerät und dem Teilnehmer,
Ermitteln einer oberen Kerbfrequenz, die erforderlich ist, um eine spektral kompatible Datenübertragungsrate für jede einer Vielzahl von unteren Kerbfrequenzen unter Verwendung der ermittelten Längen (Y, Z) zu erzielen, wobei zwischen der unteren Kerbfrequenz und der oberen Kerbfrequenz keine Datenübertragung erfolgt,
Auswählen der unteren und der oberen Kerbfrequenz, bei denen die höchste Datenübertragungsrate erzielt wird, während die spektrale Kompatibilität für die gemessenen Abstände aufrechterhalten wird,
und
Übertragen von Daten in Downstreamrichtung von dem entfernt liegenden DSL-Endgerät bei einer Frequenz unterhalb der unteren Kerbfrequenz und oberhalb der oberen Kerbfrequenz.

6. Verfahren nach Anspruch 5, bei dem jede der Vielzahl von unteren Kerbfrequenzen ungefähr um 25 kHz variiert.

7. Verfahren nach Anspruch 5, bei dem die Steigung der Leistung des übertragenen Signals von der unteren Kerbfrequenz -200 dB/Dekade beträgt.

8. Verfahren nach Anspruch 5, bei dem die Steigung der Leistung des übertragenen Signals zur oberen Kerbfrequenz hin +200 dB/Dekade beträgt.

9. Verfahren nach Anspruch 5, bei dem für obere Kerbfrequenzen, die größer sind als ein oberer Schwellenwert, die obere Kerbfrequenz auf 1.000.000 kHz festgesetzt wird.

10. Verfahren nach Anspruch 9, bei dem der obere Schwellenwert etwa 1 MHz beträgt.

11. Verfahren nach Anspruch 5, bei dem die Steigung des übertragenen Signals von der unteren Frequenz fa zur oberen Frequenz fb vom ungefilterten sin(x) /x-Roll-Off durch spektrale Formung des schärferen Roll-Offs unter Anwendung von Fensterung und/oder Filterung eingestellt wird.

12. System zur Verteilung von Digitalen Teilnehmeranschlüssen (DSL, Digital Subscriber Lines) zur Aufrechterhaltung der spektralen Kompatibilität zwischen einem in einer Zentrale befindlichen DSL-Endgerät (110) und einem entfernt liegenden DSL-Endgerät, das aufweist:

eine Einrichtung (200) zum Ermitteln der Länge (Y) der Leitung zwischen dem in der Zentrale befindlichen DSL-Endgerät (110) und dem entfernt liegenden DSL-Endgerät (120) und der Länge (Z) der Leitung zwischen dem in der Zentrale befindlichen DSL-Endgerät (110) und dem Teilnehmer (130),
eine Einrichtung (200) zum Ermitteln des Mindest-Power-Backoffs bei einer vorgegebenen oberen Frequenz, das erforderlich ist, um eine spektral kompatible Datenübertragungsrate für jeden Wert einer Vielzahl von Werten des Power-Backoffs bei einer vorgegebenen unteren Frequenz unter Verwendung der ermittelten Längen (Y, Z) zu erzielen,
eine Einrichtung (200) zum Auswählen der Kombination von Power-Backoffs bei der unteren und der oberen Frequenz, welche die höchste Datenübertragungsrate ergibt,
und
eine Einrichtung (200) zum Regeln der Downstream-Übertragungsleistung des entfernt liegenden DSL-Endgeräts zwischen der unteren und der oberen Frequenz durch den Betrag der Steigung zwischen dem Power-Backoff für die untere Frequenz und dem Power-Backoff für die obere Frequenz.

13. System nach Anspruch 12, bei dem die vorgegebene obere Frequenz etwa 1104 kHz beträgt.

14. System nach Anspruch 12, bei dem die vorgegebene untere Frequenz etwa 138 kHz beträgt.

15. System nach Anspruch 12, bei dem die Einrichtung zum Ermitteln des Mindest-Power-Backoffs bei der vorgegebenen oberen Frequenz einen solchen Mindest-Power-Backoff für jeden Wert einer Vielzahl von Werten des Power-Backoffs für die vorgegebene untere Frequenz unter Variation um 1 dB ermittelt.

16. System zur Verteilung von Digitalen Teilnehmeranschlüssen (DSL, Digital Subscriber Lines), das befähigt ist, die spektrale Kompatibilität zwischen einem in einer Zentrale befindlichen DSL-Endgerät (110) und einem entfernt liegenden DSL-Endgerät aufrechtzuerhalten, das aufweist:

eine Einrichtung zum Ermitteln der Länge (Y) der Leitung zwischen dem in der Zentrale befindlichen DSL-Endgerät und dem entfernt liegenden DSL-Endgerät und der Länge (Z) der Leitung zwischen dem in der Zentrale befindlichen DSL-Endgerät (110) und dem Teilnehmer (130),
eine Einrichtung (200) zum Ermitteln einer oberen Kerbfrequenz, die erforderlich ist, um eine spektral kompatible Datenübertragungsrate für jede einer Vielzahl von unteren Kerbfrequenzen zu erzielen, wobei zwischen der unteren Kerbfrequenz und der oberen Kerbfrequenz keine Datenübertragung erfolgt, unter Verwendung der ermittelten Längen
(Y, Z),
eine Einrichtung (200) zum Auswählen der unteren und der oberen Kerbfrequenz, bei denen die höchste Datenübertragungsrate erzielt wird, während die spektrale Kompatibilität für die gemessenen Abstände aufrechterhalten wird,
und
eine Einrichtung (200) zum Regeln der Downstream-Übertragung von Daten von dem entfernt liegenden DSL-Endgerät unterhalb der unteren Kerbfrequenz und oberhalb der oberen Kerbfrequenz.

17. System nach Anspruch 16, bei dem die Einrichtung zum Ermitteln einer oberen Kerbfrequenz die obere Kerbfrequenz für jede einer Vielzahl von unteren Kerbfrequenzen ermittelt, die ungefähr um 25 kHz variieren.

18. System nach Anspruch 16, bei dem die Steigung der Leistung des übertragenen Signals so geregelt wird, dass sie von der unteren Kerbfrequenz -200 dB/Dekade beträgt.

19. System nach Anspruch 16, bei dem die Steigung der Leistung des übertragenen Signals so geregelt wird, dass sie zur oberen Kerbfrequenz hin +200 dB/Dekade beträgt.

**Revendications**

1. Procédé permettant d'augmenter les vitesses de transmission des données vers un abonné dans un système de lignes numériques d'abonnés (DSL) tout en conservant la compatibilité spectrale entre un terminal DSL à base CO et un terminal DSL à base RT, comprenant les étapes consistant à :

évaluer la longueur (Y) de la ligne entre le terminal DSL à base CO et le terminal DSL à base RT et la longueur (Z) de la ligne entre le terminal DSL à base CO et l'abonné ;

déterminer la réduction de puissance minimale à une fréquence supérieure définie au préalable nécessaire pour fournir une vitesse de transmission des données spectralement compatible pour chacune des multiples valeurs de réduction de puissance à une fréquence inférieure au préalable en utilisant les longueurs (Y, Z) estimées ;

sélectionner la combinaison de réductions de puissance à des fréquences inférieures et supérieures qui fournit la vitesse de transmission des données la plus élevée ; et

ajuster la puissance de transmission en aval de chaque ton de fréquence transmise du terminal DSL à base RT entre la fréquence inférieure et supérieure par le montant de la pente entre la réduction de puissance pour la fréquence inférieure et la réduction de puissance pour la fréquence supérieure.

2. Le procédé selon la revendication 1, dans lequel les multiples valeurs de réduction de puissance pour la fréquence inférieure varient.

3. Le procédé selon la revendication 1, dans lequel la fréquence supérieure définie au préalable est d'environ 1 104 kHz.

4. Le procédé selon la revendication 1, dans lequel la fréquence inférieure définie au préalable est d'environ 138 kHz.

5. Procédé pour augmenter les vitesses de transmission des données vers un abonné dans un système de lignes numériques d'abonnés (DSL) tout en conservant la compatibilité spectrale entre un terminal DSL à base CO et un terminal DSL à base RT, comprenant les étapes consistant à :

déterminer la longueur (Y) de la ligne entre le terminal DSL à base CO et le terminal DSL à base RT et la longueur (Z) de la ligne entre le terminal DSL à base CO et l'abonné ;

déterminer une fréquence de réjection supérieure nécessaire afin de fournir une vitesse de transmission des données spectralement compatible pour chacune des multiples fréquences de réjection inférieures en utilisant les longueurs (Y, Z) estimées, où les données ne sont pas transmises entre les fréquences de réjection inférieures et supérieures ;

sélectionner les fréquences de réjection inférieures et supérieures qui fournissent la vitesse de transmission des données la plus élevée tout en conservant la compatibilité spectrale pour les distances mesurées ; et

transmettre les données en aval depuis le terminal DSL à base RT en dessous de la fréquence de réjection inférieure et au-dessus de la fréquence de réjection supérieure.

6. Le procédé selon la revendication 5, dans lequel chacune des multiples fréquences de réjection inférieures varie d'environ le 25 kHz.

7. Le procédé selon la revendication 5, dans lequel la pente de la puissance du signal transmis est de -200 dB/décade depuis la fréquence de réjection inférieure.

8. Le procédé selon la revendication 5, dans lequel la pente de la puissance du signal transmis est de +200 dB/décade en direction de la fréquence de réjection supérieure.

9. Le procédé selon la revendication 5, dans lequel pour les fréquences de réjection supérieures à un seuil supérieur, la fréquence de réjection supérieure est fixée à 1 000 000 kHz.

10. Le procédé selon la revendication 9, dans lequel le seuil supérieur est d'environ 1 MHz.

11. Le procédé selon la revendication 5, dans lequel la pente du signal de puissance transmis depuis la fréquence inférieure fa jusqu'à la fréquence supérieure fb est ajustée depuis le routage non filtré sin(x)/x par formage spectral du routage plus précis en utilisant le fenêtrage et/ou le filtrage.

12. Système pour le déploiement de lignes numériques d'abonnés (DSL) afin de conserver la compatibilité spectrale entre un terminal DSL à base CO (110) et un terminal DSL à base RT, comprenant :

un moyen (200) de détermination de la longueur (Y) de la ligne entre le terminal DSL à base CO (110) et le terminal DSL à base RT (120) et la longueur (Z) de la ligne entre le terminal DSL à base CO (110) et l'abonné (130) en utilisant les longueurs (Y, Z) estimées ;

un moyen (200) de détermination de la réduction de puissance minimale à une fréquence supérieure définie au préalable nécessaire afin de fournir une vitesse de transmission des données spectralement compatible pour chacune des multiples valeurs de réduction de puissance à une fréquence inférieure prédéfinie ;

un moyen (200) de sélection de la combinaison de réductions de puissance aux fréquences inférieures et supérieures qui fournit la vitesse de transmission des données la plus élevée ; et

un moyen (200) de contrôle de la puissance de transmission en aval du terminal DSL à base RT entre la fréquence inférieure et supérieure par le montant de la pente entre la réduction de puissance pour la fréquence inférieure et la réduction de puissance pour la fréquence supérieure.

13. Le système selon la revendication 12, dans lequel la fréquence supérieure définie au préalable est d'environ 1 104 kHz.

14. Le système selon la revendication 12, dans lequel la fréquence inférieure définie au préalable est d'environ 138 kHz.

15. Le système selon la revendication 12, dans lequel le moyen de détermination de la réduction de puissance minimale à la fréquence supérieure définie au préalable détermine cette réduction de puissance minimale pour chacune des multiples de valeurs de réduction de puissance pour la fréquence inférieure définie au préalable variant de 1 db.

16. Système pour le déploiement de lignes numériques d'abonnés (DSL) capables de conserver la compatibilité spectrale entre un terminal DSL à base CO et un terminal DSL à base RT, comprenant :

un moyen de détermination de la longueur (Y) de la ligne entre le terminal DSL à base CO et le terminal DSL à base RT et la longueur (Z) de la ligne entre le terminal DSL à base CO (110) et l'abonné (130) en utilisant les longueurs (Y, Z) estimées ;

un moyen (200) de détermination d'une fréquence de réjection supérieure nécessaire afin de fournir une vitesse de transmission des données spectralement compatible pour chacune des multiples fréquences de réjection inférieures, où les données ne sont pas transmises entre les fréquences de réjection inférieures et supérieures ;

un moyen (200) de sélection des fréquences de réjection inférieures et supérieures qui fournissent la vitesse de transmission des données la plus élevée tout en conservant la compatibilité spectrale pour les distances mesurées ; et

un moyen (200) de contrôle de la transmission des données en aval depuis le terminal DSL à base RT en dessous de la fréquence de réjection inférieure et au-dessus de la fréquence de réjection supérieure.

17. Le système selon la revendication 16, dans lequel le moyen de détermination définit la fréquence de réjection supérieure pour chacune des multiples fréquences de réjection inférieures variant d'environ 25 kHz.

18. Le système selon la revendication 16, dans lequel la pente de la puissance du signal transmis est contrôlée de manière à être de -200 dB/décade depuis la fréquence de réjection inférieure.

19. le système selon la revendication 16, dans lequel la pente de la puissance du signal transmis est contrôlée de manière à être de +200 dB/décade en direction de la fréquence de réjection supérieure.

Z kft

110                    120                    130

| Central Office ATU-C | Y kft | RT-based ADSL ATU-I | Z-Y kft | RT-based ADSL ATU-R |

FIG. 1

260   DISPLAY                    DATABASE   250

        PROCESSOR   210   I/O
                          UNIT              BBTH       240

                          230

        MEMORY   220

                                           200

**FIG. 2**

FIG. 3

FIG. 4

FIG. 5

FIG. 6

FIG. 7

FIG. 8

FIG. 9

FIG. 10

FIG. 11

FIG. 12

Input Y, Z — 410

$i = 1$
$PBO_1 = 0 \text{ dB}$ — 420

Determine min.
PBOb for
$PBOa_i$ — 430

Store PBOb for
$PBOa_i$ — 440

450

480

PBOa$_i$ less
than max ? — N → Select best
PBOa and
PBO b

Y

END — 490

$i = i + 1$ — 460

$PBOa_i =$
$PBOa_{i-1} + step$ — 470

FIG. 13

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9933215 A
- EP 0969605 A
- US 6229855 B

**Non-patent literature cited in the description**

- **J. YANG ; D. REILLY.** Performance of CO Deployed ADSL due to Crosstalk from RT Deployed ADSL. *T1E1.4/2000-302*
- **D. VEENEMAN ; G. MCANINCH ; G. SHERRRILL.** Simulations of ADSL with Crosstalk from Remotely-Deployed SDSL. *T1E1.4/2000-240*